# EUROPEAN PATENT APPLICATION

(11) **EP 2 028 814 A1**
(43) Date of publication of application: **25.02.2009**
(21) Application number: 07291024.3
(22) Date of filing: 20.08.2007
(51) Int. Cl.: H04L 29/06

(54) **Method of performing a handover and corresponding network units**

(71) Applicant: Alcatel Lucent, 75008 Paris (FR)
(72) Inventor: Hofmann, Dirk, 74321 Bietigheim-Bissingen (DE)
(74) Representative: Zinsinger, Norbert

(57) **Abstract**

The invention concerns a method of performing a handover (1424) of a wireless packet-based connection between a user equipment (4) and a core network (3) from a source radio access network (1) with a first layer two technology to a target radio access network (2) with the same or a different layer two technology. In the user equipment (4) two radio interfaces (41, 42) are provided, one interface (41) serving as a source radio interface with the source radio access network (1) and the other interface (42) serving as a target radio interface with the target radio access network (2). A wireless connection (24) between the user equipment (4) and the target radio access network (2) is established before releasing a wireless connection (14) between the user equipment (4) and the source radio access network (1). The same IP address is configured on each of the two radio interfaces (41, 42) during the time period of parallel existence of the two wireless connections (14, 24). The handover process (1424) is executed by using Proxy Mobile IP layer three handover processes and controlled by multistandard mobility management entities (40, 100, 200) provided in the user equipment (4) and the source and target radio networks (1, 2).

## Description

The invention relates to a method of performing a handover of a wireless packet-based connection, established between a user equipment and a core network, from a source radio access network with a first layer two technology to a target radio access network with the same or a different layer two technology, wherein the source radio access network and the target radio access network are both connected to the core network. The invention also relates to the corresponding user equipment, a network unit of the source radio access network, a network unit of the target radio access network, and a network unit of the core network, for execution of said method,

In the future, different Radio Access Networks (= RANs) will be combined to a heterogeneous mobile network. Such a heterogeneous network has benefits for both a user and an operator of the network. The user can always be best connected by steering his radio connections to the most adequate access system. The operator can do load-sharing to optimise the network performance and the network utilisation.

Since each RAN has its specific layer two (= L2) mobility functions, terminal mobility between these networks cannot be achieved on L2 (L2 is the data link layer according to the OSI model; OSI = Open Systems Interconnection Basic Reference Model). Furthermore, each RAN will be at least an IP sub-net of its own (IP = Internet Protocol). This means that a change of the RAN implies a change of the IP address and requires a mobility mechanism at layer three (= L3) or above (L3 is the network layer according to the OSI model).

Mobile IP is an Internet Engineering Task Force (= IETF) standard communications L3 mobility protocol that enables a mobile device to roam between networks while maintaining a permanent IP address. Mobile lPv4 (cf. C. Perkins: IP Mobility Support for IPv4. RFC 3344, IETF, Aug. 2002, Standards Track) and Mobile IPv6 (cf. D. Johnson, C. Perkins, and J. Arkko: Mobility Support in IPv6. RFC 3775, IETF, June 2004, Standards Track) support mobility between different L3 sub-nets by using two IP addresses: a primary address (= home address) as a permanent identifier which never changes, and a secondary IP address (= care-of address, COA) as a variable locator, i.e., associated with a visited network.

According to Mobile IP, the mobile device or a foreign agent (only in Mobile IPv4) has a function to signal the location of the mobile device to a routing anchor known as the home agent. The home agent stores information about the mobile device whose permanent address is in the home agent's network. A foreign agent stores information about the mobile device visiting its network. Using one of these Mobile IP protocols and a Make-Before-Break (= MBB) handover sequence, a seamless and loss-less handover is possible: A requirement for the home agent to enable a loss-less handover using a Mobile IP protocol and an MBB handover sequence, is accepting uplink packets from the old locator for a specific time after registration of the new' locator. The Make-Before-Break principle means that a target radio link is connected before a source radio link is released.

But using these protocols, one or more of the following problems may arise:
(a) All user equipment (= UE) must be equipped with one of these L3 mobility protocols at least.
(b) L3 mobility related signalling is required via the bandwidth-limited radio interface.
(c) The bi-directional tunnel mode generates tunnel overhead via the bandwidth-limited radio interface.
(d) In case of route-optimisation mode (only IPv6), the mobility of the UE is not hidden from the communication partner.
(e) Handover execution control for L2 and L3 is located in the UE.
(f) The L3 mobility protocols require security interactions between the UE and the network.
(g) The L3 mobility protocols only describe a Break-Before-Make (=BBM) handover sequence with a disruption of the L2 and L3 connectivity

As there are and will be many IP devices without Mobile IP client functionality, a solution has been developed which enables some other entity! to provide mobility support on behalf of a mobility-unaware IP device. Proxy Mobile IPv4 (cf. K. Leung, G. Dommety, P. Yegani, and K. Chowdhury: WiMAX Forum/3GPP2 Proxy Mobile IPv4. http://www.ietf.org/internet-drafts/draft-leung-mip4-proxy-mode-03, July 2007) and Proxy Mobile IPv6 (cf. S. Gundavelli, K. Leung, V. Devarapalli, K. Chowdhury, and B. Patil: Proxy Mobile IPv6. http://www.ietf.org/internet-drafts/draft-ietf-netlmm-proxymip6-01.txt, June 2007) have been proposed as L3 mobility protocols to avoid the disadvantages of standard Mobile IP. In particular, Proxy Mobile IP avoids most of the above mentioned disadvantages (a) - (g) for horizontal L3 handover using one radio interface in the UE. The Proxy Mobile IP scheme extends Mobile IP signalling and reuses the home agent via a mobility access gateway in the network. The mobility access gateway in the network performs the signalling and does the mobility management on behalf of the mobile node. The Home Agent needs to be extended with a local mobility anchor function to be Proxy Mobile IP capable.

However, no description has been given so far how Proxy Mobile IP will work; in a vertical handover process or general in a process, which uses two radio interfaces in the UE. A "horizontal" handover refers to a handover between access networks (e.g., Wireless Access Points, cells, etc.) of the same type, i.e., based on the same technology. A "vertical" handover refers to the change from an access network of one technology to an access network of a different technology.

It is the object of the present invention to provide a method for an improved handover of a wireless packet-based connection.

The object of the present invention is achieved by a method of performing a handover of a wireless packet-based connection, established between a user equipment and a core network, from a source radio access network with a first layer two technology to a target radio access network with the same or a different layer two technology, whereby the method comprises the steps of providing in the user equipment two radio interfaces, one of the two radio interfaces serving as a source radio interface with the source radio access network and the other one of the two radio interfaces serving as a target radio interface with the target radio access network, establishing a wireless connection between the user equipment and the target radio access network before releasing the wireless connection between the user equipment and the source radio access network, configuring at the user equipment the same IP address on each of the two radio interfaces during the time period of parallel existence of the two wireless connections which are established both to the target radio access network and the source radio access network, executing the handover process by using Proxy Mobile IP layer three handover processes, and controlling the handover process by multi-standard mobility management entities provided in the user equipment, and the source and target radio networks or the core network. Furthermore, the object of the present invention is achieved by a user equipment for use in a handover of a wireless packet-based connection, established between the user equipment and a core network, from a source radio access network with a first layer two technology to a target radio access network with the same or a different layer two technology, whereby the user equipment is adapted to provide in the user equipment two radio interfaces, one of the two radio interfaces serving as a source radio interface with the source radio access network and the other one of the two radio interfaces serving as a target radio interface with the target radio access network, establish a wireless connection with the target radio access network before releasing the wireless connection with the source radio access network, configure at the user equipment the same IP address on each of the two radio interfaces during the time period of parallel existence of the two wireless connections which are established both to the target radio access network and the source radio access network, execute the handover process by using Proxy Mobile IP layer three handover processes, and control the handover process by a multi-standard mobility management entity provided in the user equipment. Moreover, the object of the present invention is achieved by a network unit of a source radio access network, the network unit supporting a handover of a wireless packet-based connection, established between a user equipment and a core network, from the source radio access network with a first layer two technology to a target radio access network with the same or a different layer two technology, whereby the network unit is adapted to interface the user equipment via one of two radio interfaces provided in the user equipment, one of the two radio interfaces serving as a source radio interface with the source radio access network and the other one of the two radio interfaces serving as a target radio interface with the target radio access network, release the wireless connection with the user equipment after an establishment of a wireless connection between the user equipment and the target radio access network, address the source radio interface with an IP address configured at the user equipment on each of the two radio interfaces during the time period of parallel existence of the two wireless connections which are established both to the target radio access network and the source radio access network, execute the handover process by using Proxy Mobile IP layer three handover processes, and control the handover process by a multi-standard mobility management entity provided in the source radio network. And the object of the present invention is achieved by a network unit of a target radio access network, the network unit supporting a handover of a wireless packet-based connection, established between a user equipment and a core network, from a source radio access network with a first layer two technology to the target radio access network with the same or a different layer two technology, whereby the network unit is adapted to interface the user equipment via one of two radio interfaces provided in the user equipment, one of the two radio interfaces serving as a source radio interface with the source radio access network and the other one of the two radio interfaces serving as a target radio interface with the target radio access network, establish a wireless connection to the user equipment before a release of the wireless connection between the user equipment and the source radio access network, address the target radio interface with an IP address configured at the user equipment on each of the two radio interfaces during the time period of parallel existence of the two wireless connections which are established both to the target radio access network and the source radio access network, execute the handover process by using Proxy Mobile IP Layer three handover ' processes; and control the handover process by a multi-standard mobility management entity provided in the target radio network. Furthermore, the object of the present invention is achieved by a network unit of a core network, the network unit supporting a handover of a wireless packet-based connection, established between a user equipment and the core network, from a source radio access network with a first layer two technology to the target radio access network with the same or a different layer two technology whereby the network unit is adapted to interface the user equipment via two radio interfaces provided in the user equipment, the one of the two radio interfaces serving as a target radio interface with the target radio access network and the other one of the two radio interfaces serving as a source radio interface with the source radio access network, trigger an establishment of a wireless connection between the user equipment and the target radio access network before a release of a wireless connection between the user equipment and the source radio access network, address the source radio interface and the target radio interface with an IP address configured at the user equipment on each of the two radio interfaces during the time period of parallel existence of the two wireless connections established to the target radio access network and the source radio access network, execute the handover process by using Proxy Mobile IP Layer three handover processes; and control the handover process by a multi-standard mobility management entity provided in the core network.

The target radio access network and the source radio access network may be wireless access networks providing access to the operator's IP services or the Internet via the core network. Each of the wireless access networks may cover a different geographic area partly overlapping with a neighbouring network area and be operated by a different network operator. The target radio access network and the source radio access network can be based on same or different technologies, e.g., UMTS = Universal Mobile Telecommunications System, HSDPA = High Speed Downlink Data Access, WCDMA = Wide-band Code Division Multiple Access, WiMAX = Worldwide Interoperability for Microwave Access, LTE = Long Term Evolution.

Two radio interfaces of the UE, one as the source radio interface, one as the target radio interface, are involved in the PMIP handover process (PMIP = Proxy Mobile IP). The method applies the Make-Before-Break principle wherein the wireless connection between the UE and the target radio access network is established before the wireless connection between the UE and the source radio access network is released. Thus, for a short duration, the same IP address is used in the two radio interfaces operated in the UE. The handover process is controlled by MxMM entities in the UE and the networks (MxMM = Multi-standard Mobility Management).

The present invention increases the application range of Proxy Mobile IP, which is being standardised for horizontal L3 handover within one radio access technology, to a vertical L3 handover in heterogeneous mobile networks.

Furthermore, the proposed method describes an enhanced Proxy Mobile IP to be used with two radio interfaces taking part in the UE using an MBB handover sequence.

Using this method, it is possible to execute a loss-less and seamless handover process in homogeneous and heterogeneous mobile networks avoiding the disadvantages of standard Mobile IP and the current standardisation state of Proxy Mobile IP.

The present invention responds to the estimate that mobility in future heterogeneous mobile networks will most likely be based on IP mechanisms (cf. 3GPP Technical report TR 23.882 V1.11.0 (2007-07): 3GPP System Architecture Evolution: Report on Technical Options and Conclusions, Release 7). The present invention also responds to the estimate that network operators will most likely prefer proxy mobile IP mechanisms over standard mobile IP mechanisms.

By using the proposed invention, all advantages of PMIP can be used for vertical L3 handover. And, the proposed invention can also be used for horizontal L3 handover within one radio access technology using two radio interfaces in the UE.

Further advantages are achieved by the embodiments of the invention indicated by the dependent claims.

According to a preferred embodiment of the invention, the MxMM entities which are provided in the UE, and in the network units of the source and target radio network or in the core network are responsible for the entire processing of the handover process. In particular, the UE comprises a MxMM entity which is adapted to operate in the UE the two radio interfaces, initiate the establishment of the wireless connection with the target radio access network before initiating the release of the wireless connection with the source radio access network, configure the same IP address on each of the two radio interfaces during the time period of parallel existence of the two wireless connections, execute the handover process by using Proxy Mobile IP layer three handover processes, and control the handover process.

Likewise, the network unit of the source radio access network preferably comprises a MxMM entity which is adapted to operate an interface to the UE, initiate the release of the wireless connection with the UE after initiating the establishment of the wireless connection between the UE and the target radio access network, address the source radio interface of the UE with the IP address configured at the UE on each of the two radio interfaces during the time period of parallel existence of the two wireless connections, execute the handover process by using Proxy Mobile IP layer three handover processes, and control the handover process.

Preferably, the network unit of the target radio access network comprises a MxMM entity which is adapted to operate in analogy to the network unit of the source radio access network, i.e., which is adapted to operate an interface to the UE, initiate the establishment of the wireless connection to the UE before initiating the release of the wireless connection between the UE, address the target radio interface with the IP address configured at the UE on each of the two radio interfaces during the time period of parallel existence of the two wireless connections, execute the handover process by using Proxy Mobile IP Layer three handover processes; and control the handover process.

Preferably, the network unit of the core network comprises a MxMM entity which is adapted to operate in analogy to the network unit of the source radio access network and the network unit of the target radio access network, i.e., which is adapted to interface the user equipment via the two radio interfaces provided in the user equipment, trigger the establishment of the wireless connection between the user equipment and the target radio access network before a release of a wireless connection between the user equipment and the source radio access network, address the source radio interface and the target radio interface with an IP address configured at the user equipment on each of the two radio interfaces during the time period of parallel existence of the two wireless connections established to the target radio access network and the source radio access network, execute the handover process by using Proxy Mobile IP Layer three handover processes, and control the handover process.

According to a preferred embodiment of the invention, the handover is triggered by a handover decision of a handover policy function. The handover policy function may be implemented in a network, e.g., in the source radio access network or in the core network connected both to the target radio access network and the source radio access network. The handover policy function can also be implemented in the UE where it is manually triggered by a user of the UE or automatically responding to a decreasing signal strength. Triggered by the handover decision, a resource reservation and context transfer procedure is executed for requesting resources in the target radio access network, for transferring MxMM related data from the source radio access network to the target radio access network and for transferring target radio data from the target radio access network to the source radio access network. The transferred MxMM related data may comprise UE capability information, UE identifiers, and information about authentication, authorisation and policies, The transferred target radio data may comprise radio frequencies and code information about codes to be used in dependence of specific technologies.

According to another preferred embodiment of the invention, an uplink of the UE is switched from the source radio access network to the target radio access network after the establishment of the wireless connection between the UE and the target radio access network. The uplink represents a link for IP packet traffic originating from the user equipment and containing the IP address as source IP address specified in the packets of the IP packet traffic. After the switch of the uplink, a downlink between the source radio access network and the user equipment is maintained for a pre-determined time period, whereby the downlink represents a link for IP packet traffic destined to the user equipment and containing the IP address as destination address. The downlink is kept open in order to allow packets that are still en route via the source radio access network to the UE to arrive at the UE. If the downlink was closed too early and no forwarding mechanism between source radio access network and target radio access network is used, some IP packets would never arrive at the UE and thus would not be available for decoding and presentation to the user of the UE. After the pre-determined time period has passed, the wireless connection between the user equipment and the source radio access network is released.

According to another preferred embodiment of the invention, the pre-determined time period is chosen with regard to at least one of the following issues. The type of the source radio access network may determined how fast packets can be routed via the source radio access network to the UE. The larger the physical distance of the connection between the UE and a home agent of the UE, the longer it takes to route packets from the home agent to the UE. If the source radio access network must cope with a high traffic load, it is probable that the transmission of packets to the UE will be delayed. Further, it may be more time-consuming or important to transmit some packet types to the UE or receive them from the UE than another packet type. For example, real-time traffic will receive a higher transmission priority then non real-time traffic.

In a preferred embodiment, a binding update according to a Proxy Mobile IP scheme is sent from the target radio access network to a home agent of the UE after the establishment of the wireless connection between the user equipment and the target radio access network. The binding update may be a corresponding PMIP procedure. When the home agent receives the binding update, the binding update serves as a trigger for the home agent to initiate a change in the routing of IP packets destined to the IP address assigned to the user equipment. According to the routing change, these IP packets are no longer routed via the source radio access network but via the target radio access network.

To avoid a loss of uplink packets it is required, that the home agent will accept uplink packets coming from the source radio access network for a specific time after processing the binding update sent from the target radio access network, because after the downlink routing change at the home agent the UE further on sends uplink packets via the source radio access network.

According to another preferred embodiment of the invention, an indication is provided to the UE that a downlink route of packets destined to the user equipment is switched from the source radio access network to the target radio access network. This indication is provided after establishment of the wireless connection between the user equipment and the target radio access network. The indication provided to the UE may be constituted by downlink packets which are received by the UE on the target radio interface. The UE classifies the receipt of packets on the target radio interface as an indication related to a switch because the UE expects the receipt of packets on the source radio interface. By this unexpected way of packet receipt, the UE is signalled the switch. Alternatively, the indication provided to the UE may be constituted by a downlink switch event which is received by the UE whereby the downlink switch event originates from the target radio access network.

For Proxy Mobile IPv6, an unsolicited router advertisement can be sent to the UE whereby the router advertisement indicates to the UE that no access router is available any more in the source radio access network for the UE. This unsolicited router advertisement is sent after the establishment of the wireless connection between the UE and the target radio access network. When the UE receives the router advertisement, the router advertisement can also serve as a trigger for the UE to execute a link detach procedure for releasing the wireless connection between the user equipment and the source radio access network.

In a preferred embodiment, the uplink of the user equipment is switched from the source radio access network to the target radio access network by assigning priorities to the interfaces of the UE. Then, uplink data are transmitted via the prioritised interface of the user equipment, i.e., via the target radio interface. If a user application running on the UE uses an IP address which is configured by means of an implementation of IPv6, the IR layer uses a mechanism which "knows" to which of the interfaces, i.e., the source radio interface and the target radio interface, the uplink data are to be sent. This is easy to be done via a priority classification. The data are sent! , via the interface that has been assigned the higher priority. The priority classification is managed by the MxMM entity of the UE. In case there is an IPv6 router advertisment which deactivates the hitherto default router on the "old" interface (source radio interface) by setting the life time to zero, the IP layer automatically switches to the other interface (target radio interface).

These as well as further features and advantages of the invention will be better appreciated by reading the following detailed description of presently preferred exemplary embodiments taken in conjunction with accompanying drawings of which:
- Fig. 1: is a block diagram showing a handover of a wireless connection with a distributed MxMM entity according to an embodiment of the invention.
- Fig. 2: is a message flow diagram of the handover shown in Fig. 1.
- Fig. 3: is a block diagram showing a handover of a wireless connection with a centralised MxMM entity according to another embodiment of the invention.
- Fig. 4: is a message flow diagram of the handover shown in Fig. 3

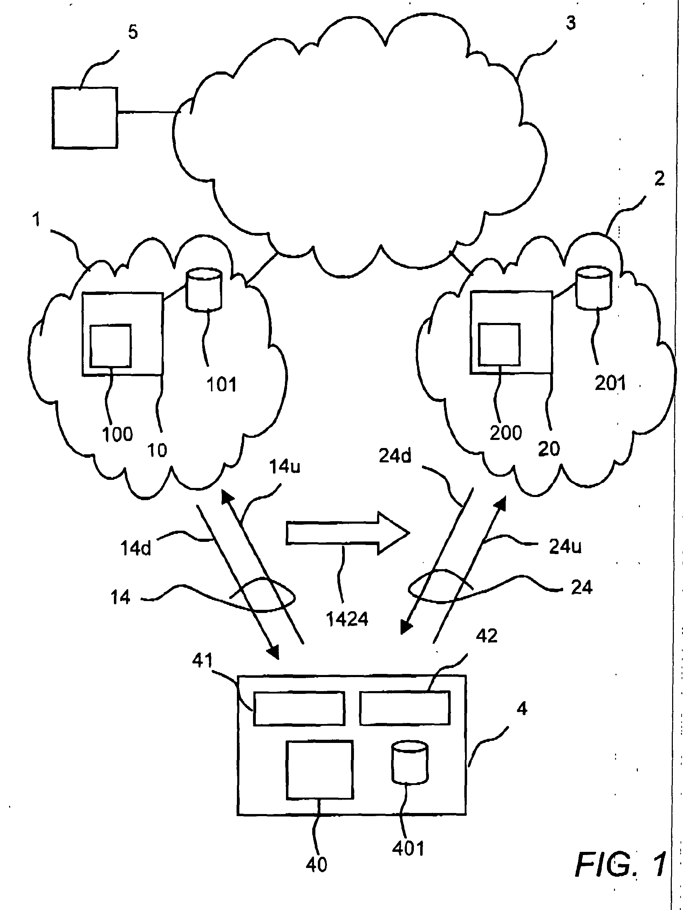

Fig. 1 shows a telecommunications core network 3 usable for IP based packet transport. In the case of cellular mobile radio communication systems such as UMTS, the core network 3 may not comprise the global Internet but the network nodes SGSN and GGSN of the mobile radio network (SGSN = Serving GPRS Support Node; GGSN = Gateway GPRS Support Node; GPRS = General Packet Radio Service). In the case of the future standard LTE/SAE, the core network essentially comprises the PDN gateway (SAE = System Architecture Evolution; PDN = Packet Data Network). The core network is "upwards" connected with the IP services of the operator and the global internet. "Downwards", the core network is connected with mobile radio access networks auch as GSM/GPRS or UMTS (GSM = Global System for Mobile Communications). :

The core network 3 is connected with a first radio access network 1 and a : second radio access network 2. The radio access networks 1, 2 provide a user equipment 4 with wireless access to operator's IP services or the Internet via the core network 3. For example, the radio access networks 1, 2 comprise base stations that are transceivers for air interface connections 14, 24 with the UE 4.

The UE 4 is at first connected via the wireless connection 14 with the first radio access network 1, hereinafter called source RAN 1. The wireless connection 14 comprises an uplink 14u where packets are transmitted from the UE 4 to the source RAN 1 and a downlink 14d where packets are transmitted from the source RAN 1 to the UE 4. Packets sent on the uplink 14u contain as source address the IP address of the UE 4. Packets sent on the downlink 14d contain as destination address the IP address of the UE 4.

Then, the UE 4 performs a handover 1424 from the source RAN 1 to a target RAN, i.e., the second radio access network 2. Therefore, the UE 4 is at a later point of time connected via the wireless connection 24 with the target RAN 2. The wireless connection 24 comprises an uplink 24u where packets are transmitted from the UE 4 to the target RAN 2 and a downlink 24d where packets are transmitted from the target RAN 2 to the UE 4. Packets sent on the uplink 24u contain as source address the IP address of the UE 4.

Packets sent on the downlink 24d contain as destination address the IP address of the UE 4.

The source RAN 1 comprises a memory 101 connected to a network unit 10 with a control unit 100. The network unit 10 further comprises a MxMM entity. Preferably, it is also possible that the functionality of the MxMM entity is provided by the control unit 100 It is also possible that the MxMM entity of the network unit 10 represents the control unit 100. The target RAN 2 comprises a memory 201 connected to a network unit 20 with a control unit 200. The network unit 20 further comprises a MxMM entity. Preferably, it is also possible that the functionality of the MxMM entity is provided by the control unit 200. It is also possible that the MxMM entity of the network unit 20 represents the control unit 200.

Each of the network unit 10 and the network unit 20 is composed of one of several interlinked computers, i.e., a hardware platform, a software platform basing on the hardware platform and several application programs executed by the system platform formed by the software and hardware platform. The functionalities of the network unit 10 and the network unit 20 are provided by the execution of these application programs. The application programs or a selected part of these application programs constitute a computer software product providing a handover service as described in the following, when executed on the system platform. Further, such computer software product is constituted by a storage medium, i.e., the memories 101 and 201, storing these application programs or said selected part of application programs.

The UE 4 is a mobile terminal such as a mobile telephone, a PDA or a laptop (PDA = Private Digital Assistant). The UE 4 comprises a control unit 40, a memory 401, a source radio interface 41 and a target radio interface 42. It is possible that the UE 4 further comprises a MxMM entity. It is also possible that the functionality of the MxMM entity is provided by the control unit 40. However, it is also possible that the MxMM entity represents the control unit 40. Via the source radio interface 41, the UE 4 sends packets to and receives packets from the source RAN 1. Via the target radio interface 42, the UE 4 sends packets to and receives packets from the target RAN 2.

From a functional point of view, the UE 4 is composed of one or several interlinked computers, i.e., a hardware platform, a software platform basing on the hardware platform and several application programs executed by the system platform formed by the software and hardware platform. The functionalities of the UE 4 are provided by the execution of these application programs. The application programs or a selected part of these application programs constitute a computer software product providing a handover service as described in the following, when executed on the system platform. Further, such computer software product is constituted by a storage medium, i.e., the memory 401, storing these application programs or said selected part of application programs.

A home agent 5 serving the UE 4 is connected to the core network 3.

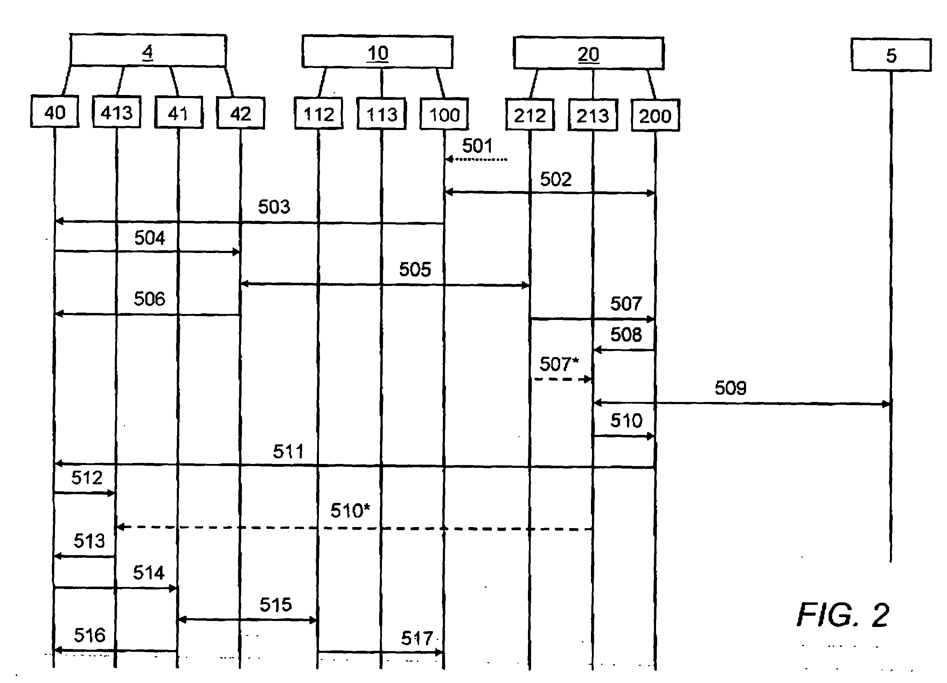

Fig. 2 shows a message flow diagram of the handover shown in Fig. 1. The UE 4 comprises the MxMM/TE entity 40 with a processing entity/interface 413 on the L3 layer, a source radio interface 41 (= L2(S)) to the source RAN 1 on the L2 layer and a target radio interface 42 (= L2(T)) to the target RAN 2 on the L2 layer. The network unit 10 of the source RAN 1 comprises a processing entity/interface 112 on the L2 layer, a processing entity/interface 113 on the L3 layer and a MxMM/NET entity 100. The network unit 20 of the source RAN 2 comprises a processing entity/interface 212 on the L2 layer, a processing entity/interface 213 on the L3 layer and a MxMM/NET entity 200 Fig. 2 also shows the home agent 5 of the UE 4.

A L3 handover decision for the UE 4 to handover the existing wireless connection 14 from the source radio access network 1 to the target radio access network 2 is made by a handover policy function, which can be implemented in the source radio access network 1 or in the core network 3. The decision to perform a handover may be brought about by a user's wish to be always connected to the most adequate access system. It is possible that the connection of the UE 4 to the source RAN 1 is deteriorating as the user with his UE 4 travels along a highway, leaving the coverage area of the source RAN 1. The highway leads the UE 4 into the coverage area of the target RAN 2. Therefore, it is advantageous to perform a handover of the connection to the target RAN 2.

This handover decision is received as a message 501 by the Multi-Standard Mobility Management entity 100 of the source RAN 1 (= MxMM/NET; NET = Network). Triggered by the received handover decision, the network unit 10 of the source RAN 1, i.e., the MxMM/NET entity 100, executes on the one hand a resource reservation and context transfer procedure 502 with the target RAN 2, i.e., the MxMM/NET entity 200. Resource reservation is required for admission control at the target radio access network. A context transfer allows a better support for node based mobility so that the applications running on mobile nodes can operate with minimal disruption. Key objectives are to reduce latency and packet losses, and to avoid the re-initiation of signalling for time consuming authentication and authorisation procedures to and from the mobile node, i.e., the UE 4.

In the resource reservation and context transfer procedure, the source RAN 1 transmits connection-related data such as UE capability information, UE identifiers, and information about authentication, authorisation and policies, etc. to the target RAN 2. In the contrary direction, the target RAN 2 transmits radio related information to the source RAN 1, e.g. specifying that a certain code must be used with UMTS.

On the other hand, the source RAN 1 (MxMM/NET entity 100) sends a handover command 503 to the MxMM entity 40 in the UE 4 (= MxMM/TE; TE = Terminal Equipment). For this and the other commands, the Media Independent Command Service (= MICS) of the currently developed IEEE 802.21 standard could be used (cf. Draft IEEE Standard for Local and Metropolitan Area Networks: Media Independent Handover Services. IEEE P802.21/D05.02, June 2007).

Then, the MxMM/TE entity 40 starts the UE-part of the handover execution by sending a Link Attach Command 504 to the target radio interface 42 (= L2(T)) of the UE 4 for triggering a Link Attach procedure 505 involving the L2(T) 42 and the L2 interface 212 of the target RAN 2. In the Link Attach procedure 505, a connection 24 between the UE 4 and the target RAN 2 via the L2(T) interface 42 is established, simultaneously to the existing connection 14 between the UE 4 and the source RAN 1 via the L2(S) interface 41.

When the target radio link 24 between the UE 4 and the target RAN 2 is set up, a Link Attach Event 506 is sent on the backward direction from the L2(T) 42 to the MxMM/TE entity 40 of the UE 4. Likewise, a Link Attach Event 507 is sent from the L2 interface 212 of the target RAN 2 to the MxMM/NET entity 200 of the target RAN 2. For this and the other events, the Media Independent Event Service (= MIES) of IEEE 802.21 could be used.

If the existing connection of the UE 4 is not to be interrupted, the IP address used on the L2(S) 41 must also be used on the L2(T) 42. Therefore, the UE 4 configures the same IP address on the target radio interface L2(T) 42 as on the source radio interface L2(S) 41. This configuration can be done after the Link Attach Event 506. The parallel operation of the two interfaces L2(S) 41 and L2(T) 42 configured with the same IP address may be realised by a change of a corresponding software driver. The configuration of the same IP address may be done UE internally, based on a corresponding processing of the data received by the UE 4. The parallel operation of the two interfaces with the same IP address causes no L3 address conflict because both radio interfaces L2(S) 41 and L2(T) 42 are operated on different L2 and L3 links. The source RAN 1 and the target RAN 2 represent two different sub-networks. Furthermore, the parallel operation of the two interfaces L2(S) 41 and L2(T) 42 configured with the same IP address may be based on the well-known channel bonding or link aggregation mechanism to combine two or more interfaces, which is primarily used to increase redundancy and throughput.

In the meantime, the target RAN 2 (MxMM/NET entity 200) sends a MIP (= Mobile IP) Registration Command 508 to the L3 processing entity/interface 213, i.e., a gateway access router, of the target RAN 2 to start the PMIP procedure 509 as being standardised by K. Leung et al. (cited above) or S. Gundavelli et al. (cited above). In place of Link Attach Event 507 and MIP Registration Command 508, a Link Attach Event 507* can be sent directly to the L3 processing entity/interface triggering the PMIP procedure 509. The PMIP procedure 509 is executed between the L3 processing entity/interface 213 of the target RAN 2 and the home agent 5 associated with the UE 4. After the PMIP procedure 509 is finished, a MIP Registration Event 510 is sent from the L3 processing entity/interface 213 to the MxMM/NET entity 200 of the target RAN 2.

After that, the UE 4 needs a trigger that the L3 downlink route is switched from the source RAN 1 to the target RAN 2. This indication could either be a receipt of downlink traffic at the UE 4 via the target radio interface L2(T) 42, which was normally expected on the source radio interface L2(S) 41 of the UE 4. A second solution could be a L3 Downlink Switch event 511 which is sent from the target RAN 2 to the UE 4. In the case of Proxy Mobile IPv6, an unsolicited Router Advertisement 510* may be sent directly to the processing entity/interface on the L3 layer of UE 4 replacing MIP Registration Event 510, L3 Downlink Switch Event 511 and Interface Preference Change Command 512 as a third solution (cf. S. Gundavelli et al., cited above).

After reception of the downlink switch trigger, the processing entity/interface 413 on the layer 3 switches the radio interface for L3 uplink traffic either by an Interface Preference Change command 512, sent from the MxMM/TE entity 40 to the L3 processing entity/interface 413 or by receiving downlink traffic on the target radio interface or by receiving an unsolicited Router Advertisement 510*. When a corresponding Interface Preference Change Event 513, sent from the L3 processing entity/interface 413 to the MxMM/TE entity 40, is received in the backward direction, a Link Detach Command 514 is sent from the MxMM/TE entity 40 to the L2(S) interface 41. Triggered by the command 514, a Link Detach procedure 515 for the source radio link 41 (= L2(S)) can be executed or simply the L2(S) will be deactivated. The Link Detach procedure 515 or the deactivation of L2(S) closes the connection between the UE 4 and the source RAN 1.

After the Link Detach Procedure 515 is finished, Link Detach Event messages 516, 517 are sent from the L2(S) interface 41 of the UE 4 to the MxMM/TE entity 40 of the UE 4 and from the L2 interface 112 of the source RAN 1 to the MxMM/NET entity 100 of the source RAN 1.

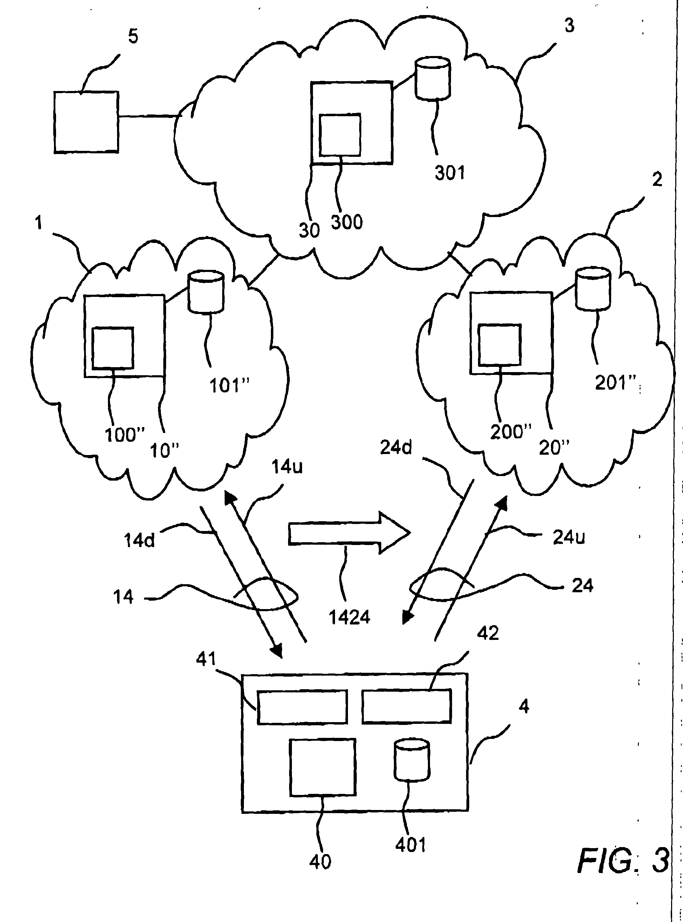

Fig. 3 shows similar to Fig. 1 a telecommunications core network 3 usable for IP based packet transport. The core network 3 is connected with a first radio access network 1 and a second radio access network 2. The radio access networks 1, 2 provide a user equipment 4 with wireless access to operator's IP services or the Internet via the core network 3. For example, the radio access networks 1, 2 comprise base stations that are transceivers for air interface connections 14, 24 with the UE 4.

The UE 4 is at first connected via the wireless connection 14 with the first radio access network 1, hereinafter called source RAN 1. The wireless connection 14 comprises an uplink 14u where packets are transmitted from the UE 4 to the source RAN 1 and a downlink 14d where packets are transmitted from the source RAN 1 to the UE 4. Packets sent on the uplink 14u contain as source address the IP address of the UE 4. Packets sent on the downlink 14d contain as destination address the IP address of the UE!4.

Then, the UE 4 performs a handover 1424 from the source RAN 1 to a target RAN, i.e., the second radio access network 2. Therefore, the UE 4 is at a later point of time connected via the wireless connection 24 with the target RAN 2. The wireless connection 24 comprises an uplink 24u where packets are transmitted from the UE 4 to the target RAN 2 and a downlink 24d where packets are transmitted from the target RAN 2 to the UE 4. Packets sent on the uplink 24u contain as source address the IP address of the UE 4.

Packets sent on the downlink 24d contain as destination address the IP address of the UE 4.

The source RAN 1 comprises a memory 101" connected to a network unit 10" with a RAN control unit 100". The target RAN 2 comprises a memory 201" connected to a network unit 20" with a RAN control unit 200".

Each of the network unit 10" and the network unit 20" is composed of one or several interlinked computers, i.e., a hardware platform, a software platform basing on the hardware platform and several application programs executed by the system platform formed by the software and hardware platform. The functionalities of the network unit 10" and the network unit 20" are provided by the execution of these application programs. The application programs or a selected part of these application programs constitute a computer software product providing a handover service as described in the following, when executed on the system platform. Further, such computer software product is: constituted by a storage medium, i.e., the memories 101" and 201", storing these application programs or said selected part of application programs.

The UE 4 is a mobile terminal such as a mobile telephone, a PDA or a laptop. The UE 4 comprises a control unit 40, a memory 401, a source radio interface 41 and a target radio interface 42. It is possible that the UE 4 further comprises a MxMM entity. It is also possible that the functionality of the MxMM entity is provided by the control unit 40. However, it is also possible that the MxMM entity represents the control unit 40. Via the source radio interface 41, the UE 4 sends packets to and receives packets from the source RAN 1. Via the target radio interface 42, the UE 4 sends packets to and receives packets from the target RAN 2.

From a functional point of view, the UE 4 is composed of one or several interlinked computers, i.e., a hardware platform, a software platform basing on the hardware platform and several application programs executed by the system platform formed by the software and hardware platform. The functionalities of the UE 4 are provided by the execution of these application programs. The application programs or a selected part of these application programs constitute a computer software product providing a handover service as described in the following, when executed on the system platform. Further, such computer software product is constituted by a storage medium, i.e., the memory 401, storing these application programs or said selected part of application programs.

The core network 3 comprises a memory 301 connected to a network unit 30 with a control unit 300. The network unit 30 further comprises a MxMM entity Preferably, it is also possible that the functionality of the MxMM entity is provided by the control unit 300. It is also possible that the MxMM entity of the network unit 30 represents the control unit 300.

The network unit 30 is composed of one or several interlinked computers, i.e., a hardware platform, a software platform basing on the hardware platform and several application programs executed by the system platform formed by the software and hardware platform. The functionalities of the network unit 30 are provided by the execution of these application programs. The application programs or a selected part of these application programs constitute a computer software product providing a handover service as described in the following, when executed on the system platform. Further, such computer software product is constituted by a storage medium, i.e., the memory 301, storing these application programs or said selected part of application programs.

A home agent 5 serving the UE 4 is connected to the core network 3.

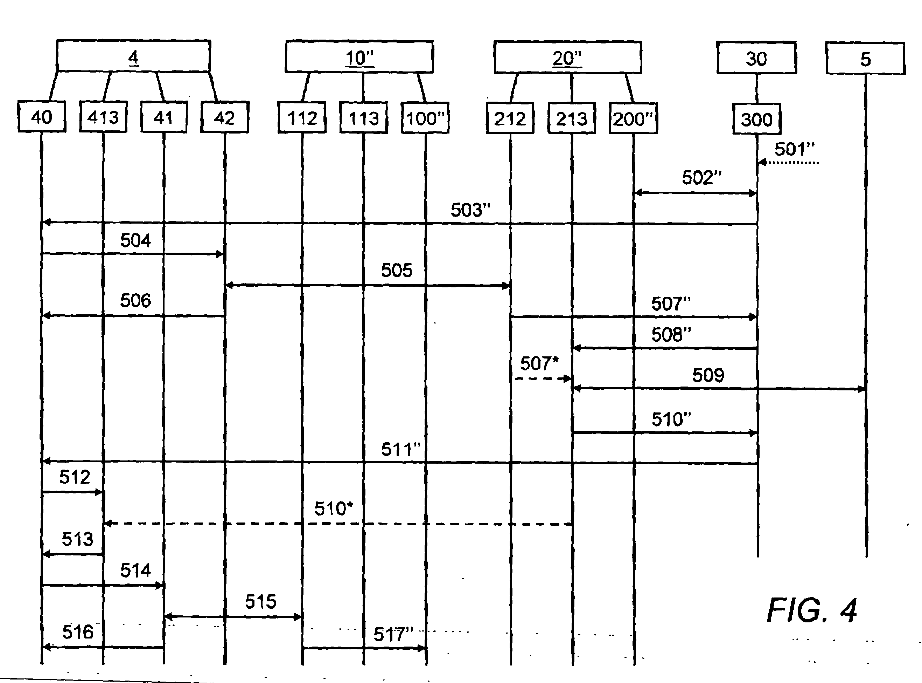

Fig. 4 shows a message flow diagram of the handover shown in Fig. 3. The UE 4 comprises the MxMM/TE entity 40 with a processing entity/interface 413 on the L3 layer, a source radio interface 41 (= L2(S)) to the source RAN 1 on the L2 layer and a target radio interface 42 (= L2(T)) to the target RAN 2 on the L2 layer. The network unit 10 of the source RAN 1 comprises a processing entity/interface 112 on the L2 layer, a processing entity/interface 113 on the L3 layer and a RAN control entity 100". The network unit 20 of the source RAN 2 comprises a processing entity/interface 212 on the L2 layer, a processing entity/interface 213 on the L3 layer and a RAN control entity 200". The network unit 30 of the core network 3 comprises a MxMM/NET entity 300. Fig. 4 also shows the home agent 5 of the UE 4.

A L3 handover decision for the UE 4 to handover the existing wireless connection 14 from the source radio access network 1 to the target radio access network 2 is received as a message 501" by the Multi-Standard Mobility Management entity 300 of the core network 3. Triggered by the received handover decision, the network unit 30 of the core network 3, i.e., the MxMM/NET entity 300, executes on the one hand a resource reservation and context transfer procedure 502" with the target RAN 2, i.e., the RAN control entity 200".

On the other hand, the core network 3 (MxMM/NET entity 300) sends a handover command 503" to the MxMM entity 40 in the UE 4 (= MxMM/TE). For this and the other commands, the MICS of the currently developed IEEE 802.21 standard could be used (cf. Draft IEEE Standard for Local and Metropolitan Area Networks: Media Independent Handover Services. IEEE P802.21/D05.02, June 2007).

Then, the MxMM/TE entity 40 starts the UE-part of the handover execution by sending a Link Attach Command 504 to the target radio interface 42 (= L2(T)) of the UE 4 for triggering a Link Attach procedure 505 involving the L2(T) 42 and the L2 interface 212 of the target RAN 2. In the Link Attach procedure 505, a connection 24 between the UE 4 and the target RAN 2 via the L2(T) interface 42 is established, simultaneously to the existing connection 14 between the UE 4 and the source RAN 1 via the L2(S) interface 41.

When the target radio link 24 between the UE 4 and the target RAN 2 is set up, a Link Attach Event 506 is sent on the backward direction from the L2(T) 42 to the MxMM/TE entity 40 of the UE 4. Likewise, a Link Attach Event 507" is sent from the L2 interface 212 of the target RAN 2 to the MxMM/NET entity 300 of the core network 3. For this and the other events, the MIES of IEEE 802.21 could be used.

If the existing connection of the UE 4 is not to be interrupted, the IP address used on the L2(S) 41 must also be used on the L2(T) 42. Therefore, the UE 4 configures the same IP address on the target radio interface L2(T) 42 as on the source radio interface L2(S) 41. This configuration can be done after the Link Attach Event 506. The parallel operation of the two interfaces L2(S) 41 and L2(T) 42 configured with the same IP address may be realised by a change of a corresponding software driver. The configuration of the same IP address may be done UE internally, based on a corresponding processing of the data received by the UE 4. The parallel operation of the two interfaces with the same IP address causes no L3 address conflict because both radio interfaces L2(S) 41 and L2(T) 42 are operated on different L2 and L3 links. The source RAN 1 and the target RAN 2 represent two different sub-networks. Furthermore, the parallel operation of the two interfaces L2(S) 41 and L2(T) 42 configured with the same IP address may be based on the well-known channel bonding or link aggregation mechanism to combine two or more interfaces, which is primarily used to increase redundancy and throughput.

In the meantime, the core network 3 (MxMM/NET entity 300) sends a MIP Registration Command 508" to the L3 processing entity/interface 213, i.e., a gateway access router, of the target RAN 2 to start the PMIP procedure 509 as being standardised by K. Leung et al. (cited above) or S. Gundavelli et al. (cited above). In place of Link Attach Event 507" and MIP Registration Command 508", a Link Attach Event 507* can be sent directly to the L3 processing entity/interface triggering the PMIP procedure 509. The PMIP procedure 509 is executed between the L3 processing entity/interface 213, of the target RAN 2 and the home agent 5 associated with the UE 4. After the PMIP procedure 509 is finished, a MIP Registration Event 510" is sent from the L3 processing entity/interface 213 to the MxMM/NET entity 300 of the core network 3.

After that, the UE 4 needs a trigger that the L3 downlink route is switched from the source RAN 1 to the target RAN 2. This indication could either be a receipt of downlink traffic at the UE 4 via the target radio interface L2(T) 42, which was normally expected on the source radio interface L2(S) 41 of the UE 4. A second solution could be a L3 Downlink Switch event 511" which is sent from the core network 3 to the UE 4. In the case of Proxy Mobile IPv6, an unsolicited Router Advertisement 510* may be sent directly to the processing entity/interface on the L3 layer of UE 4 replacing MIP Registration Event 510", L3 Downlink Switch Event 511" and Interface Preference Change Command 512 as a third solution (cf. S. Gundavelli et al., cited above).

After reception of the downlink switch trigger, the processing entity/interface 413 on the layer 3 switches the radio interface for L3 uplink traffic either by an Interface Preference Change command 512, sent from the MxMM/TE entity 40 to the L3 processing entity/interface 413 or by receiving downlink traffic on the target radio interface or by receiving an unsolicited Router Advertisement 510*. When a corresponding Interface Preference Change Event 513, sent from the L3 processing entity/interface 413 to the MxMM/TE entity 40, is received in the backward direction, a Link Detach Command 514 is sent from the MxMM/TE entity 40 to the L2(S) interface 41. Triggered by the command 514, a Link Detach procedure 515 for the source radio link 41 (= L2(S)) can be executed or simply the L2(S) will be deactivated. The Link Detach procedure 515 or the deactivation of L2(S) closes the connection between the UE 4 and the source RAN 1.

After the Link Detach Procedure 515 is finished, Link Detach Event messages 516, 517" are sent from the L2(S) interface 41 of the UE 4 to the MxMM/TE entity 40 of the UE 4 and from the L2 interface 112 of the source RAN 1 to the RAN Control entity 100 of the source RAN 1.

The switch-over of the downlink at the home agent 5 (switch from source RAN 1 - UE 4 to target RAN 2 - UE 4) is performed earlier than the switch-over of the uplink at the UE 4 (switch from UE 4 - source RAN 1 to UE 4 - target RAN 2).

After the switch-over of the downlink at the home agent 5, the "old" uplink and the "new" uplink should be operated simultaneously in the home agent 5 for a pre-determined time interval because after the switch-over of the downlink the UE further on sends uplink packets via the source radio access network. After expiration of the timer only the "new" uplink will be used by the home agent 5 further on.

After the switch-over of the uplink at the UE 4, the "old" downlink and the "new" downlink are operated simultaneously for a pre-determined time interval. "Old" downlink means the downlink via the source RAN 1 to the UE 4, "new" downlink means the downlink via the target RAN 1 to the UE 4. The simultaneous operation of the two downlink connections follows the Make-Before-Break principle.

In a preferred embodiment, the "old" downlink and the "new" downlink are operated simultaneously for less than 1 s, in a particularly preferred embodiment for less than 100 ms. This time interval is essential to give the IP packets still transmitted on the "old" downlink enough time to reach the UE 4 before the "old" downlink is closed. If duplicate address detection (= DAD) without optimistic mode is required on the "new" link, then both links must be operated simultaneously until the timer for DAD procedure is expired. After the pre-determined time interval has expired, the "old" downlink is closed/released and only the "new" downlink is kept in operation.

On the other hand, the time interval of the simultaneously operation of the two downlinks should not be chosen too long, preferably not longer than 1 s, since a simultaneous maintenance of two parallel interfaces may on the hand consume a lot of electrical energy which leads to an untimely exhaust of the battery of the UE 4. On the other hand, the double usage of radio resources (e.g. dedicated channels in UMTS) must be minimised. Thus, the timing of the uplink switch-over and the downlink switch-over has to be appropriately adjusted.

The run-time of IP packets on the downlink via the source RAN 1 and the target RAN 2 may be different. This run-time difference may be considered when determining the time period of simultaneous operation of the two interfaces L2(S) 41 and L2(T) 42 with the same IP address.

## Claims

1. A method of performing a handover (1424) of a wireless packet-based connection between a user equipment (4) and a core network (3) from a source radio access network (1) with a first layer two technology to a target radio access network (2) with the same or a different layer two technology,
**characterised in**
**that** the method comprises the steps of:
providing in the user equipment (4) two radio interfaces (41, 42), one (41) of the two radio interfaces (41, 42) serving as a source radio interface with the source radio access network (1) and the other one (42) of the two radio interfaces (41, 42) serving as a target radio interface with the target radio access network (2);
establishing a wireless connection (24) between the user equipment (4) and the target radio access network (2) before releasing a wireless connection (14) between the user equipment (4) and the source radio access network (1);
configuring at the user equipment (4) the same IP address on each of the two radio interfaces (41, 42) during the time period of parallel existence of the two wireless connections (14, 24) established to the target radio access network (2) and the source radio access network (1);
executing the handover process (1424) by using Proxy Mobile IP layer three handover processes; and
controlling the handover process (1424) by multi-standard mobility management entities (40, 100, 200, 300) provided in the user equipment (4), and the source and target radio networks (1, 2) or the core network (3).

2. The method of claim 1,
**characterised in**
**that** the method comprises the further step of:
initiating the handover (1424) by a handover decision (501. 501") of a handover policy function; and
triggered by the handover decision (501, 501 "), executing a resource reservation and context transfer procedure (502, 502") for transferring UE related multistandard data from the source radio access network (1) to the target radio access network (2), for admission control at the target radio access network (2) and for transferring radio parameters from the target radio access network (2) to the source radio access network (1).

3. The method of claim 1,
**characterised in**
**that** the method comprises the further steps of:
after establishing the wireless connection (24) between the user equipment (4) and the target radio access network (2), switching an uplink (14u, 24u) of the user equipment (4) from the source radio access network (1) to the target radio access network (2), whereby the uplink (14u, 24u) represents a link for IP packet traffic originating from the user equipment (4) and containing the IP address as source IP address;
after the switch of the uplink (14u, 24u), maintaining a downlink (14d) between the source radio access network (1) and the user equipment (4) for a pre-determined time period, whereby the downlink (14d) represents a link for IP packet traffic destined to the user equipment (4) and containing the IP address as destination address; and
after a lapse of the time period, releasing the wireless connection (14) between the user equipment (4) and the source radio access network (1).

4. The method of claim 3,
**characterised in**
**that** the method comprises the further step of:
determining the time period on dependence of at least one of the following factors: a type of the source radio access network (1); a physical distance of the connection between the user equipment (4) and a home agent (5) of the user equipment (4); a load of the source radio access network (1); a type of packet traffic transmitted to/from the user equipment (4), in particular real-time traffic or non real-time traffic.

5. The method of claim 1,
**characterised in**
**that** the method comprises the further steps of:
after establishing the wireless connection (24) between the user equipment (4) and the target radio access network (2), indicating to the user equipment (4) that a downlink route (14d, 24d) of packets destined to the user equipment (4) is switched from the source radio access network (1) to the target radio access network (2); and
receiving by the user equipment (4) the indication by receiving downlink packets on the target radio interface (42) or by receiving a downlink switch event (511, 511") from the target radio access network (2).

6. The method of claim 1,
**characterised in**
**that** the method comprises the further steps of:
after establishing the wireless connection (24) between the user equipment (4) and the target radio access network (2), indicating from the target radio access network (2) or the core network (3) to the user equipment (4), that an uplink switch must occur; and
triggered by this indication, executing a link detach procedure (515) for releasing the wireless connection (14) between the user equipment (4) and the source radio access network (1).

7. A user equipment (4) for use in a handover (1424) of a wireless packet-based connection between the user equipment (4) and a core network (3) from a source radio access network (1) with a first layer two technology to a target radio access network (2) with the same or a different layer two technology,
**characterised in**
**that** the user equipment (4) is adapted to provide in the user equipment (4) two radio interfaces (41, 42), one (41) of the two radio interfaces (41, 42) serving as a source radio interface with the source radio access network (1) and the other one (42) of the two radio interfaces (41, 42) serving as a target radio interface with the target radio access network (2), establish a wireless connection (24) with the target radio access network (2) before releasing a wireless connection (14) with the source radio access network (1), configure at the user equipment (4) the same IP address on each of the two radio interfaces (41, 42) during the time period of parallel existence of the two wireless connections (14, 24) established to the target radio access network (2) and the source radio access network (1), execute the handover process (1424) by using Proxy Mobile IP layer three handover processes, and control the handover process (1424) by a multi-standard mobility management entity (40) provided in the user equipment (4).

8. A network unit (10) of a source radio access network (1), the network unit (10) supporting a handover (1424) of a wireless packet-based connection between a user equipment (4) and a core network (3) from the source radio access network (1) with a first layer two technology to a target radio access network (2) with the same or a different layer two technology,
**characterised in**
**that** the network unit (10) is adapted to interface the user equipment (4) via one (41) of two radio interfaces (41, 42) provided in the user equipment (4), the one (41) of the two radio interfaces (41, 42) serving as a source radio interface with the source radio access network (1) and the other one (42) of the two radio interfaces (41, 42) serving as a target radio interface with the target radio access network (2), trigger an establishment of a wireless connection (24) between the user equipment (4) and the target radio access network (2) before a release of a wireless connection (14) with the user equipment (4), address the source radio interface (41) with an IP address configured at the user equipment (4) on each of the two radio interfaces (41, 42) during the time period of parallel existence of the two wireless connections (14, 24) established to the target radio access network (2) and the source radio access network (1), execute the handover process (1424) by using Proxy Mobile IP layer three handover processes, and control the handover process (1424) by a multi-standard mobility management entity (100) provided in the source radio network (1).

9. A network unit (20) of a target radio access network (2), the network unit (20) supporting a handover (1424) of a wireless packet-based connection between a user equipment (4) and a core network (3) from a source radio access network (1) with a first layer two technology to the target radio access network (2) with the same or a different layer two technology,
**characterised in**
**that** the network unit (20) is adapted to interface the user equipment (4) via one (42) of two radio interfaces (41, 42) provided in the user equipment (4), the one (42) of the two radio interfaces (41, 42) serving as a target radio interface with the target radio access network (2) and the other one (41) of the two radio interfaces (41, 42) serving as a source radio interface with the source radio access network (1), establish a wireless connection (24) to the user equipment (4) before a release of a wireless connection (14) between the user equipment (4) and the source radio access network (1), address the target radio interface (42) with an IP address configured at the user equipment (4) on each of the two radio interfaces (41, 42) during the time period of parallel existence of the two wireless connections (14, 24) established to the target radio access network (2) and the source radio access network (1), execute the handover process (1424) by using Proxy Mobile IP Layer three handover processes, and control the handover process (1424) by a multi-standard mobility management entity (200) provided in the target radio network (2).

10. A network unit (30) of a core network (3), the network unit (30) supporting a handover (1424) of a wireless packet-based connection between a user equipment (4) and the core network (3) from a source radio access network (1) with a first layer two technology to the target radio access network (2) with the same or a different layer two technology,
**characterised in**
**that** the network unit (30) is adapted to
interface the user equipment (4) via two radio interfaces (41, 42) provided in the user equipment (4), the one (42) of the two radio interfaces (41, 42) serving as a target radio interface with the target radio access network (2) and the other one (41) of the two radio interfaces (41, 42) serving as a source radio interface with the source radio access network (1),
trigger an establishment of a wireless connection (24) between the user equipment (4) and the target radio access network (2) before a release of a wireless connection (14) between the user equipment (4) and the source radio access network (1),
address the source radio interface (41) and the target radio interface (42) with an IP address configured at the user equipment (4) on each of the two radio interfaces (41, 42) during the time period of parallel existence of the two wireless connections (14, 24) established to the target radio access network (2) and the source radio access network (1),
execute the handover process (1424) by using Proxy Mobile IP Layer three handover processes, and
control the handover process (1424) by a multi-standard mobility management entity (300) provided in the core network (3).
